# EUROPEAN PATENT SPECIFICATION

(11) **EP 3 916 455 B1**
(45) Date of publication and mention of the grant of the patent: **09.09.2026**
(21) Application number: 21175788.5
(22) Date of filing: 25.05.2021
(51) Int. Cl.: G02B 6/44

(54) **FIBER OPTIC STRAIN RELIEF AND ASSOCIATED ASSEMBLIES**
GLASFASERZUGENTLASTUNG UND ZUGEHÖRIGE ANORDNUNGEN
SOULAGEMENT DE CONTRAINTE DE FIBRE OPTIQUE ET ENSEMBLES ASSOCIÉS

(30) Priority: 27.05.2020 US 202063030465 P
(43) Date of publication of application: 01.12.2021
(73) Proprietor: Corning Research & Development Corporation, Corning, New York 14831 (US)
(72) Inventor: BLACKWELL JR, Chois Alven, North Richland Hills, 76182 (US); FARAJ, Patrick, 10179 Berlin (DE); GUTIERREZ, Rolando Herrera, 88747 Tamaulipas (MX); HEREDIA, Vicente Uribe, Fort Worth, 76244 (US); JOHNSON, Kristine Alaina, Keller, 76248 (US); MALDONADO, Pedro Gustavo, Dallas, 752274 (US); MCKINNEY, Larry Todd, Keller, 76248 (US); TAVARES, Fabiola Patricia Villanueva, 88736 Tamaulipas (MX)
(74) Representative: Reddie & Grose LLP

(56) References cited:
- EP-A1- 0 260 425
- WO-A1-2013/087471
- WO-A1-2015/126777
- US-A- 5 617 501
- US-A1- 2003 169 993

## Description

### TECHNICAL FIELD

This disclosure generally pertains to fiber optic assemblies, and more particularly to a strain relief for a fiber optic assembly.

### BACKGROUND

Optical fibers are useful in a wide variety of applications, including the telecommunications industry for voice, video, and data transmissions. The benefits of optical fiber are well known and include higher signal-to-noise ratios and increased bandwidth compared to conventional copper-based transmission technologies. To meet modern demands for increased bandwidth and improved performance, telecommunication networks are increasingly providing optical fiber connectivity closer to end subscribers. These initiatives include fiber-to-the-node (FTTN), fiber-to-the-premises (FTTP), fiber-to-the-home (FTTH), and the like (generally described as FTTx).

In fiber optic networks, fiber optic cables may be connected to various fiber optic assemblies (e.g., hardware, housings, enclosures, etc.). The fiber optic cables are typically restrained at these connection points to protect optical fibers within the cables from potentially damaging axial, torsional, and/or bending loads. For example, the loads may be due to routing of the fiber optic cables and/or weight of the fiber optic cables. The devices or arrangements for restraining the fiber optic cables are often refer to as "strain reliefs." In one example of a strain relief to prevent axial strain on a fiber optic cable from being transferred to one or more optical fibers, the fiber optic cable is restrained in position by clamping the cable between two surfaces. Generally, the installer engages the two surfaces using clips, screws, O-rings, or the like thereby applying pressure to an outer surface of the fiber optic cable. This example may require multiple touch points and significant time to properly engage the fiber optic cable, including holding the fiber optic cable in position, holding one or more clamping elements in position, holding or actuating one or more tools, etc., which may be cumbersome for installers. Additionally, improper installation, such as overtightening, may cause signal attenuation or damage to the optical fiber(s).

In another example strain relief, a fiber optic cable may be tied to a fiber optic assembly. For example, aramid yarn (e.g., Kevlar^{®}) in the cable may be tied to one or more features of the assembly. This example also requires multiple touch points and time to properly engage the fiber optic cable to the assembly.

In a further example strain relief, a fiber optic cable may be attached to a fiber optic assembly by a cable tie. This example too requires multiple touch points and risks signal damage or attenuation due to improper installation, such as overtightening.

In addition to installation considerations, each of these example strain reliefs require considerable effort to remove the fiber optic cable from the strain relief, in the case in which a fiber should need to be rerouted or replaced.

WO 2015/126777 A1 discloses a fiber optic cable strain relief device having a plurality of post mounted to a mounting surface. The plurality of posts have a first end, a second end and a shaft extending between the first and second ends. The mounting surface is adapted to support the posts, with the posts mounting to the mounting surface at their respective first ends and extending from the mounting surface. The posts are mounted to the mounting surface such that the shafts of adjacent posts are spaced from each other by a distance configured to provide strain relief to a fiber optic cable weaved about the shafts of the adjacent posts. The mounting surface may be attached to a housing and a cover positioned over the posts.

### SUMMARY OF THE INVENTION

The invention is claimed in the independent claims to which reference should now be made. Advantageous features are set forth in the dependent claims.

In a first aspect of the invention there is provided a fiber optic assembly comprising: a connection base; a plurality of optical connection holders; and a strain relief comprising: a base; at least one forward cable channel; at least one rear cable channel aligned with the at least one forward cable channel along a longitudinal axis, wherein the at least one rear cable channel is spaced apart from the forward cable channel longitudinally at a first distance; and at least one offset post disposed between the at least one forward cable channel and the at least one rear cable channel, wherein each of the at least one forward cable channel and the at least one rear cable channel comprises a first post and a second post extending from the base, and wherein the first post is spaced apart from the second post laterally at a second distance; wherein the at least one offset post is disposed along the longitudinal axis, such that when an optical cable is installed into the strain relief the optical cable bends around the at least one offset post out of the longitudinal axis; and wherein the first post and the second post have a rectangular prism shape.

In some examples, a strain relief is provided to toollessly insert or remove a fiber optic cable into a fiber optic assembly, such as a splice tray or patch module. The strain relief may include a pair of aligned cable channels with a laterally offset post therebetween. The fiber optic cable is woven through the forward and rear cable channels and the offset post. The offset post forces the optical cable between the cable channels out of the longitudinal axis extending therebetween, such that when an axial force is applied to the optical cable, the optical cable is pulled laterally against the offset post, which increases a friction applied to a jacket of the optical cable resisting axial movement. Weaving the optical cable into the strain relief may include only one touch point and be relatively quick operation, thereby significantly reducing the time and complexity of installation.

In a case in which the optical cable needs to be removed, such as to reroute or replace the optical cable, the optical cable may be lifted out of the cable channels by simply pulling the cable up out of the channels. This may greatly reduce time and effort of the installer. In addition, the installer will be less likely to damage the cable during removal or caused to simply cut off the cable at the strain relief and reperform connection procedures.

Advantageously, the strain relief described herein may be well suited for non-round optical cables, for example Pixian, or "butterfly," cable, or other non-standard cable profiles. Additionally, the strain relief may be configured to correspond and cooperate with the width of the optical cable including the cable jacket. As such, valuable installation time may be saved by not having to strip the optical cable and install a buffer tube prior to installation, which is the case in traditional strain relief of Pixian cable as well as other optical cable types.

Additional features and advantages will be set forth in the detailed description which follows, and in part will be apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings are illustrative of selected aspects of the present description, and together with the specification explain principles and operation of methods, products, and compositions embraced by the present description. Features shown in the drawing are illustrative of selected embodiments of the present description and are not necessarily depicted in proper scale.

### BRIEF DESCRIPTION OF THE DRAWINGS

While the specification concludes with claims particularly pointing out and distinctly claiming the subject matter of the written description, it is believed that the specification will be better understood from the following written description when taken in conjunction with the accompanying drawings, wherein:
FIG. 1 is a schematic diagram of an exemplary FTTx network according to an example embodiment;
FIG. 2 is a perspective view of a fiber optic assembly according to an example embodiment;
FIG. 3 illustrates a top down view of the fiber optic assembly of FIG. 2 with the lid open to show internal features according to an example embodiment;
FIG. 4 illustrates a top down view of a fiber optic assembly with the lid open to show internal features according to an example embodiment;
FIG. 5 illustrates a perspective view of the fiber optic assembly of FIG. 2 with the lid open to show internal features according to an example embodiment; and
FIG. 6 illustrates a top down view of a strain relief associated with the fiber optic assembly according to the claimed invention.

The embodiments set forth in the drawings are illustrative in nature and not intended to be limiting of the scope of the detailed description or claims. Whenever possible, the same reference numeral will be used throughout the drawings to refer to the same or like feature. The drawings are not necessarily to scale for ease of illustration and explanation.

### DETAILED DESCRIPTION

The present disclosure is provided as an enabling teaching and can be understood more readily by reference to the following description, drawings, examples, and claims.

Terms like forward, rear, front, back, top, bottom, side, etc. are relative terms used for convenience and ease of explanation and are not intended to be limiting.

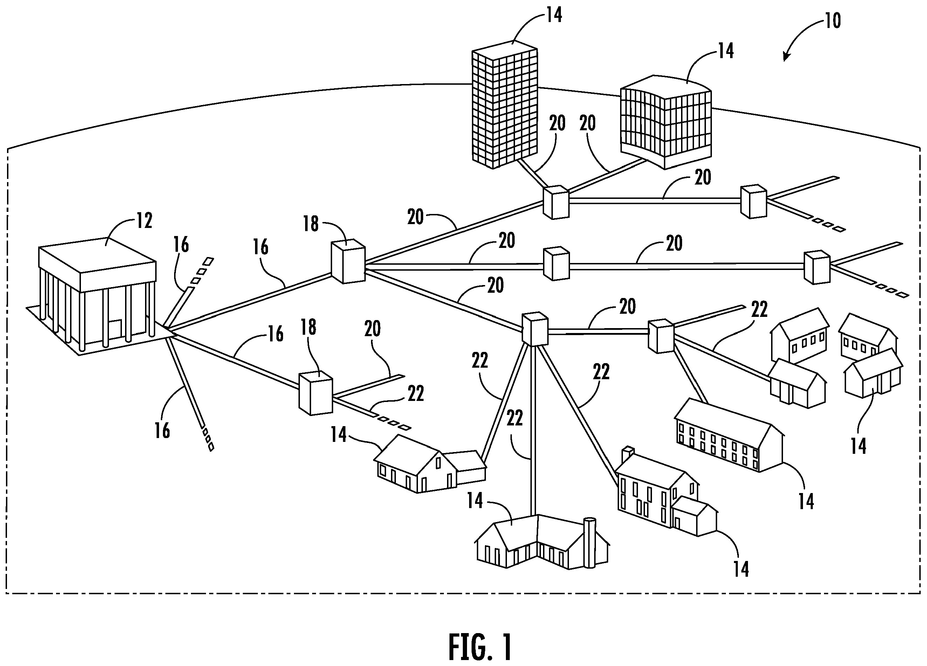

In an FTTx network, fiber optic cables are used to carry optical signals to various distribution points and, in some cases, all the way to end subscribers. For example, FIG. 1 is a schematic diagram of an exemplary FTTx network 10 that distributes optical signals generated at a switching point 12 (e.g., a central office of a network provider) to subscriber premises 14. Optical line terminals (OLTs; not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points closer to the subscriber premises 14, some or all of the optical fibers in the distribution cables 20 may be accessed to connect to one or more subscriber premises 14. Drop cables 22 extend from the network access points to the subscriber premises 14, which may be single-dwelling units (SDU), multi-dwelling units (MDU), businesses, and/or other facilities or buildings. A conversion of optical signals back to electrical signals may occur at the network access points or at the subscriber premises 14.

There are many different network architectures, and the various tasks required to distribute optical signals (e.g., splitting, splicing, routing, connecting subscribers) can occur at several locations. Regardless of whether a location is considered a switching point, local convergence point, network access point, subscriber premise, or something else, fiber optic equipment is used to house components that carry out one or more of the tasks. The fiber optic equipment may be assemblies that include drawers, trays, or modules to facilitate the tasks. The term "fiber optic assembly" will be used in this disclosure to generically refer to such equipment (or at least portions thereof). Typically such equipment is located at the switching points 12 in an FTTx network, although this disclosure is not limited to any particular intended use. Further, although an FTTx network 10 is shown in FIG. 1, the same considerations apply with respect to other types of telecommunication networks or environments, such data centers and other enterprise network environments. Like switching points (central offices), data centers may include fiber optic equipment having drawers, trays, modules or the like. In some cases subscriber premises 14 may have one or more SDUs or MDUs having drawers, trays, or modules.

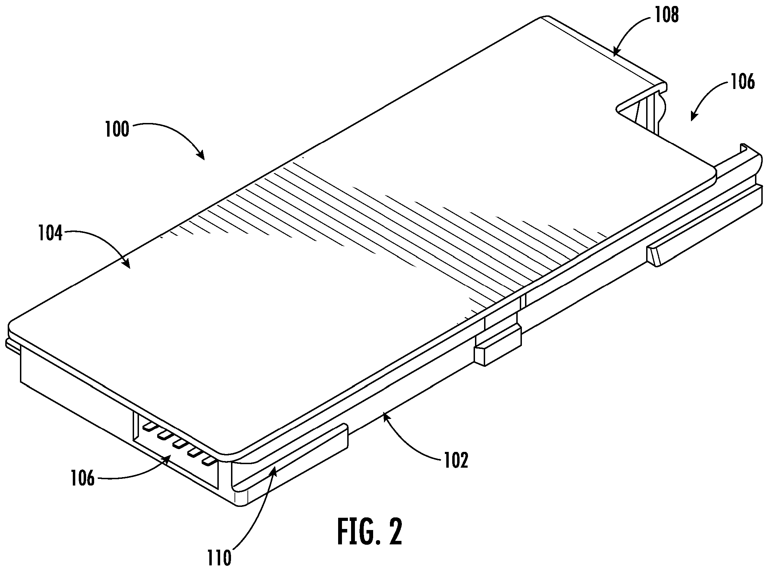

FIG. 2 is a perspective view of a fiber optic assembly 100 according to an example embodiment. The fiber optic assembly 100 includes a connection base, or base 102, providing a volume to make one or more optical connections between optical fibers, such as but not limited to splice connections, splitter connections and/or patch connections. In some embodiments, a lid 104 may be provided to enclose at least a portion of the volume between the base 102 and the lid 104. The base 102 and lid 104 may be formed of plastic, metal, or other suitable material.

In an example embodiment, the fiber optic assembly 100 may include one or more ports 106, to provide entry of an optical cable into the volume. In the depicted example, the fiber optic assembly 100 includes two ports disposed at opposite ends of the fiber optic assembly 100. To enable access to the volume of the fiber optic assembly where a lid 104 is provided, a hinge 108 may be disposed between the base 102 and the lid 104. The hinge 108 may be configured to enable the lid 104 to transition between an open position and a closed position, where access to the volume is prevented in the closed position and enabled in the open position. Additionally or alternatively, snap features, screws, or other suitable components may be included to selectively remove the lid 104 from the base 102.

In some example embodiments, the fiber optic assembly 100 may include connection features 110. The connection features 110 may be configured to enable one fiber optic assembly to attach to a second fiber optic assembly 100. For example, the base 102 of the fiber optic assembly 100 may have to longitudinal sides each including a connection feature 110. The connection feature 110 of the first longitudinal side may be complementary to the connection feature 110 of the second longitudinal side, such as a dove tail joint. When the connection features 110 of a first longitudinal side of a first fiber optic assembly 100 slide longitudinally into the complementary connection feature 110 of a second side of a second fiber optic assembly 100. The connection features 110 may connect the two fiber optic assemblies 100 to each other. In some example embodiments, the connection features 110 of the receiving longitudinal side, may have a flare or funnel shape to encourage alignment of the connection features 110 as the fiber optic assemblies are connected. Other connection features, such as snap features, tabs, or the like are also contemplated to enable expandability of the fiber optic assemblies 100.

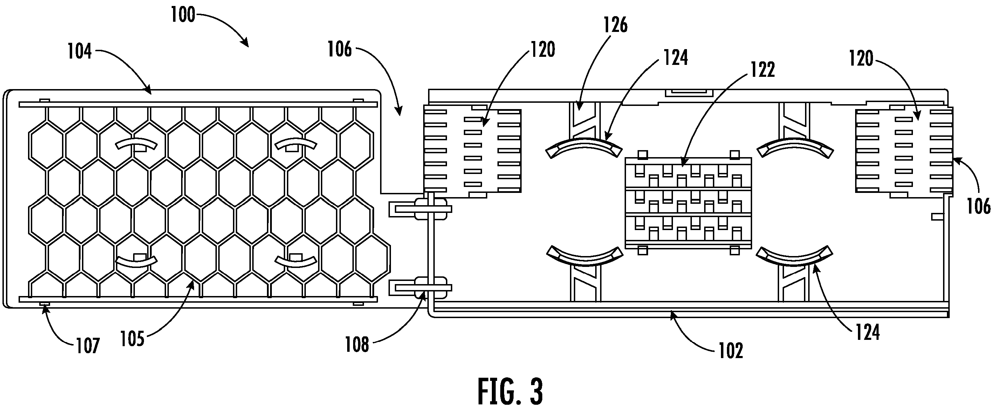

FIG. 3 illustrates a top down view of the fiber optic assembly 100 with the lid 104 open to show internal features according to an example embodiment. In some example embodiments, the lid 104 may include structural features 105 to increase the strength and or rigidity of the lid 104. The structural features 105 may be integral to the lid 104, such as formed during a common molding process. The structural features 105 may be raised patterns of material disposed on one or both sides of the lid 104, for example lines, triangles, honeycomb, or any other suitable pattern. Additionally, or alternatively, the lid 104 may include one or more closure features 107, such as detents or protrusions, configured to engage complementary closure features disposed on the base 102. The closure features 107 may be configured to limit or resist opening of the fiber optic assembly 100.

Turning to the internal features of the base 102, the base 102 includes one or more optical connection holders 122. For example, the base 102 may include one or more splice holders or adapter holders. The optical connection holders 122 may limit or restrict movement of optical connections between optical cables, thereby preventing damage or signal attenuation at the optical connection. In addition to the optical connection holders 122, the base 102 may also include one or more cable routing features configured to route incoming and outgoing optical cables to align the optical connections, as well as to provide storage for cable slack. The cable routing features may include one or more bend radius protectors 124 configured to enable a change in the direction of the routing of an optical cable while ensuring that the optical cable does not exceed a minimum bend radius. The minimum bend radius may be predetermined to limit or prevent damage to the optical cable or signal attenuation due to excessive bend radii. The cable routing features may also include one or more cable retention features 126. The cable retention features 126 may include one or more projections that are substantially parallel with the base 102. The projections may extend from a side wall of the base 102 and/or the bend radius protectors 124. The cable retention features 126 may be configured to maintain the optical cable proximate to the base 102 and/or to limit or prevent uncoiling of the routed optical cable. In some example embodiments, the cable retention features 126 may include a access feature configured to transition the optical cable from outside the cable retention features 126 to inside the cable retention features 126, for example the access feature may be a gap provided in the retention feature. In some example embodiments the gap may be angled relative to the direction of routing the optical cable to further resist inadvertent removal of the optical cable.

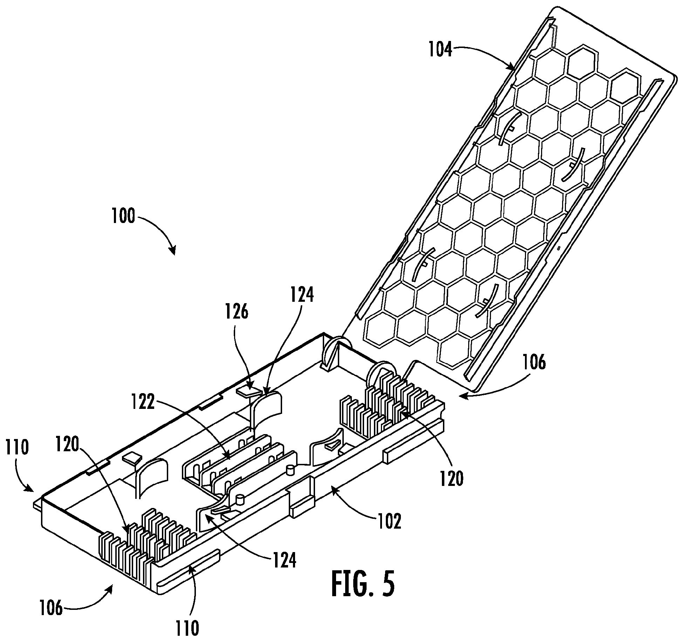

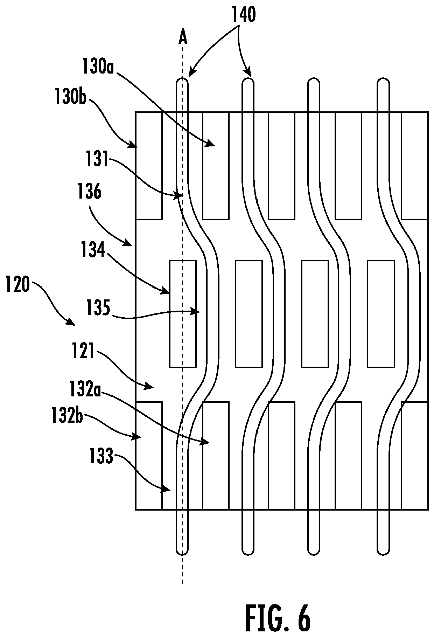

The base 102 includes one or more strain reliefs 120. The strain reliefs 120 may be provided proximate to one or more of the ports 106, such as to provide axial strain protection to the optical cable routed into the fiber optic assembly 100. The strain reliefs 120 may limit or prevent axial force applied to the optical cable from outside of the fiber optic assembly from being translated to the optical connections housed therein. The strain reliefs 120 are discussed below, in FIGs. 5 and 6, in greater detail.

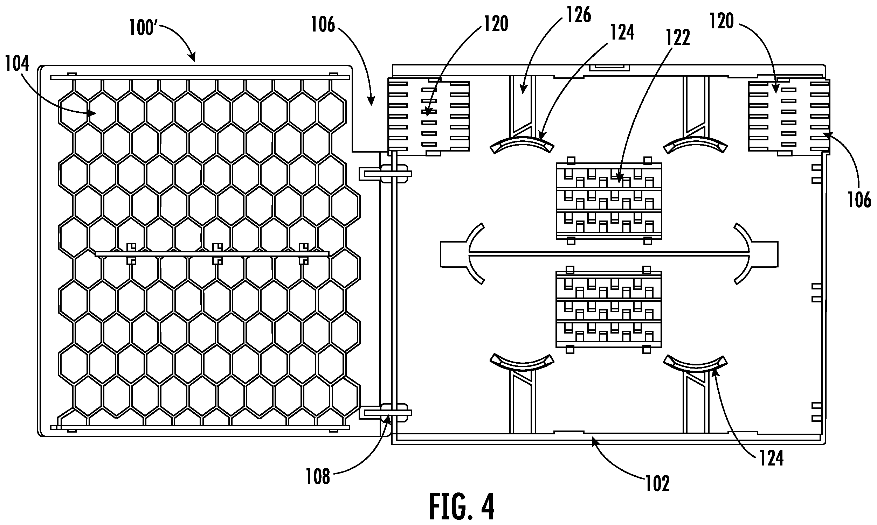

FIG. 4 illustrates a top down view of a fiber optic assembly 100' with the lid open to show internal features according to an example embodiment. The depicted fiber optic assembly 100' is similar to the fiber optic assembly 100 discussed above. However, the fiber optic assembly 100' is configured to hold twice as many optical connections and route the associated increase in optical cable. As such the fiber optic assembly 100' is approximately twice the width of the fiber optic assembly 100, discussed above.

FIG. 5 illustrates a perspective view of the fiber optic assembly 100 discussed above in reference to FIGs. 2 and 3. The perspective view of the fiber optic assembly 100 provides a view of the profile of features of the strain relief 120. The strain relief 120 includes one or more cable channels configured to receive one or more optical cables therein. The cable channels have a generally rectangular shape having a substantially planar bottom surface and two opposing planar wall extending upward from the base 102. In an example embodiment, the cable channels may be configured to receive non-round optical cables, such as Pixian or "butterfly" optical cables. In some embodiments, the cable channels may be configured for an interference or friction fit of Pixian optical cables, for example the cable channels may have a width of approximately two (2) mm and a height of approximately three (3) mm corresponding to the outer dimensions of a Pixian optical cable. In further embodiments, the cable channels may have a width of approximately two (2) mm and a height of approximately six (6) mm, enabling two Pixian optical cables to be inserted into a cable channel in a stacked configuration.

The strain relief 120 may be integral to the fiber optic assembly 100 or a portion of the fiber optic assembly 100, such as the base 102. In such an embodiment the strain relief 120 may be formed in a common mold process with the base 102. Alternatively, the strain relief 120 may be selectively removable from the fiber optic assembly 100, such that strain reliefs for different optical cable types may be inserted into the fiber optic assembly 100. The different strain reliefs may be strain reliefs 120 discussed herein with one or more different cable channel widths or heights based on the width or height of the intended optical cable.

Turning now to FIG. 6 a top down view of the strain relief 120 associated with the fiber optic assembly 100 is illustrated to show routing of an optical cable 140. The strain relief 120 includes a base 121 and two cable channels that are substantially aligned with one another along a longitudinal axis A. The two cable channels include a forward cable channel 131 and a rear cable channel 133. The rear cable channel 133 is spaced apart from the forward cable channel 131, longitudinally, at a first predetermined distance. The strain relief 120 includes also an offset post 134 disposed between the forward cable channel 131 and the rear cable channel 133. Each of the forward cable channel 131 and the rear cable channel 133 includes a first post 130a,132a and a second post 130b,132b, respectively, extending outward from the base 121. The first post 130a,132a is spaced apart from the second post 130b,132b, laterally, at a second predetermined distance. For example, the second predetermined distance may be approximately the outer diameter of the intended optical cable 140, such as about two (2) mm in the case of Pixian cable. The correspondence between the width of the cable channels 131,133 and the outer diameter of the optical cable 140 may enable a toolless interference or friction fit in the cable channels 131, 133. The offset post 134 is disposed along the longitudinal axis, such that when the optical cable 140 is installed into the strain relief 120 the optical cable bends around the offset post 134 out of the longitudinal axis A. When an axial force is applied to the optical cable 140, the optical cable 140 is pulled laterally against the offset post 134, which increases a friction applied to the optical cable 140, thereby resting axial movement. The strain relief 120 may be configured to correspond and cooperate with the width of the optical cable 140 including a protective cable jacket, such as two (2) mm in width for Pixian cable. As such, valuable installation time may be saved by not having to strip the optical cable and install a buffer tube prior to installation, which is the case in traditional strain relief of Pixian cable, as well as other optical cable types.

The posts 130, 132 have a generally rectangular prism shape, e.g. the posts 130, 132 are elongated in the longitudinal direction parallel with the longitudinal axis A of the cable channels 131,133. The rectangular prism may include generally planar sidewalls. A rectangular prism shape of the posts 130,132 is discussed herein, however other posts shapes are also contemplated, such as cylindrical, ellipsoid, or other suitable shapes. These alternative shapes are not part of the claimed invention. In some embodiments, the posts 130, 132 may include corners configured to bite into the protective cable jacket of the optical cable 140 to further resist axial movement of the optical cable 140 in the cable channels 131, 133 when a axial force is applied. In alternative embodiments, the edges of the posts 130,132 may be rounded.

In an case in which the optical cable 140 needs to be removed, such as to reroute or replace the optical cable 140, the optical cable 140 may be lifted out of the cable channels by simply pulling the optical cable 140 up out of the cable channels 131, 133. This toolless removal of the optical cable may greatly reduce time and effort of an installer rerouting or replacing optical cables. In addition, the installer may be less likely to damage the optical cable 140 during removal or caused to simply cut off the cable at the strain relief and reperform any optical connection procedures.

In an example embodiment, the strain relief 120 includes a plurality of forward cable channels 131, a plurality of rear cable channels 133, and a plurality of offset posts 134 to accommodate a corresponding plurality of optical cables 140. In some such embodiments, the plurality of offset posts 134 form an offset cable channel 135. The optical cable 140 is routed between offset posts of the offset cable channel 135 in a manner similar to the forward cable channel 131 or the rear cable channel 133, as discussed above. Similarly, adjacent forward cable channels 131 and/or rear cable channels 133 may utilize a common post 130, 132. For example, the second post 130b,132b of a first forward cable channel 131 or rear cable channel 133 may be the first post 130a,132a of a second forward cable channel 131 or rear cable channel 133.

In some example embodiments, the strain relief 120 may also include a wall 136 extending outward from at least a portion of a perimeter of the base 121. In an example embodiment, wherein the first post 130a,132a or the second post 130a,132a of the forward cable channel 131 or the rear cable channel 133 is integral to the wall 136. The first post 130a,132a, or second post 130b,132b may be fully integrated into the wall 136, or only a portion of the first post 130a,132a or second post 130b,132b may be integrated in the wall 136, such as depicted in FIG. 6.

The strain relief 120 may be formed of one or more materials, such as plastic, metal, or the other suitable materials. Preferably, the strain relief 120 is formed as a monolithic plastic component, which may be formed by injection molding.

According to the claimed invention a strain relief for an optical fiber assembly is provided including a base, a forward cable channel, a rear cable channel aligned with the at least one forward cable channel along a longitudinal axis, and an offset post disposed between the forward cable channel and the rear cable channel. Each of the at least one forward cable channel and the at least one rear cable channel includes a first post and a second post extending from the base. The offset post is disposed along the longitudinal axis, such that when an optical cable is installed into the strain relief the optical cable bends around the at least one offset post out of the longitudinal axis.

According to the claimed invention the strain relief also includes a plurality of forward cable channels, a plurality of rear cable channels, and a plurality of offset posts. The strain relief is configured to receive a plurality of optical cables. In some example embodiments, the plurality of offset posts form at least one offset cable channel. In an example embodiment, the second post of a first cable channel of the plurality of forward cable channels is the first post of a second cable channel of the plurality of forward cable channels. In some example embodiments, the strain relief also includes a wall extending along at least a portion of a perimeter of the base and the first post or the second post of the forward cable channel or the rear cable channel is integral to the wall. In an example embodiment, the first post or the second post is planar. In some example embodiments, the base is integral to the fiber optic assembly. In an example embodiment, the base is configured to be selectively attached to the fiber optic assembly. In some example embodiments, the second distance comprises about 2 mm. In an example embodiment, the strain relief comprises a monolithic plastic component.

In another example embodiment, a fiber optic assembly is provided including a connection base, a plurality of optical connection holders, and a strain relief. The strain relief including a base, a forward cable channel, a rear cable channel aligned with the at least one forward cable channel along a longitudinal axis, and an offset post disposed between the forward cable channel and the rear cable channel. Each of the at least one forward cable channel and the at least one rear cable channel includes a first post and a second post extending from the base. The offset post is disposed along the longitudinal axis, such that when an optical cable is installed into the strain relief the optical cable bends around the at least one offset post out of the longitudinal axis.

It will be apparent to those skilled in the art that various modifications and variations can be made without departing from the scope of the appended claims.

## Claims

1. A fiber optic assembly (100) comprising:
a connection base (102);
a plurality of optical connection holders (122); and
a strain relief (120) comprising:
a base (121);
at least one forward cable channel (131);
at least one rear cable channel (133) aligned with the at least one forward cable channel (131) along a longitudinal axis (A), wherein the at least one rear cable channel (133) is spaced apart from the at least one forward cable channel (131) longitudinally at a first distance; and
at least one offset post (134) disposed between the at least one forward cable channel (131) and the at least one rear cable channel (133);
wherein each of the at least one forward cable channel (131) and the at least one rear cable channel (133) comprises a first post (130a,132a) and a second post (130b,132b) extending from the base (121), and wherein the first post (130a,132a) is spaced apart from the second post (130b,132b) laterally at a second distance;
wherein the at least one offset post (134) is disposed along the longitudinal axis (A), such that when an optical cable (140) is installed into the strain relief (120) the optical cable bends around the at least one offset post (134) out of the longitudinal axis (A); and
wherein the first post (130a,132a) and the second post (130b,132b) have a rectangular prism shape.

2. The fiber optic assembly (100) of claim 1, wherein the at least one forward cable channel (131) comprises a plurality of forward cable channels, the at least one rear cable channel (133) comprises a plurality of rear cable channels, and the at least one offset post (134) comprises a plurality of offset posts, and wherein the strain relief (120) is configured to receive a plurality of optical cables (140); wherein:
each of the rear cable channels (133) is aligned with a respective one of the forward cable channels (131) along a respective one of a plurality of parallel longitudinal axes;
each rear cable channel (133) is spaced apart from the respective forward cable channel (131) longitudinally at the first distance along the respective longitudinal axis;
each of the offset posts (134) is disposed between a respective forward cable channel (131) and rear cable channel (133) along the respective longitudinal axis.

3. The fiber optic assembly (100) of claim 2, wherein the plurality of offset posts (134) form an offset cable channel (135) between each laterally adjacent pair of offset posts (134).

4. The fiber optic assembly (100) of claim 2 or 3, wherein the second post (130b,132b) of a first cable channel of the plurality of forward cable channels (131) is the first post (130a,132a) of a second cable channel of the plurality of forward cable channels (131).

5. The fiber optic assembly (100) of any of claims 1-4 further comprising:
a wall (136) extending along at least a portion of a perimeter of the base (121),
wherein the first post (130a,132a) or the second post (130b,132b) of the at least one forward cable channel (131) or the at least one rear cable channel (133) is integral to the wall (136).

6. The fiber optic assembly (100) of any of claims 1-5, wherein the base (121) is integral to the fiber optic assembly (100).

7. The fiber optic assembly (100) of any of claims 1-5, wherein the base (121) is configured to be selectively attached to the fiber optic assembly (100).

8. The fiber optic assembly (100) of any of claims 1-7, wherein the second distance is about 2 mm.

9. The fiber optic assembly (100) of any of claims 1-8, wherein the strain relief (120) is a monolithic plastic component.

## Patentansprüche

1. Glasfaseranordnung (100), die Folgendes umfasst:
eine Anschlussbasis (102);
mehrere Halter (122) für optische Anschlüsse; und
eine Zugentlastung (120), die Folgendes umfasst:
eine Basis (121);
mindestens einen vorderen Kabelkanal (131);
mindestens einen hinteren Kabelkanal (133), der entlang einer Längsachse (A) mit dem mindestens einen vorderen Kabelkanal (131) fluchtet, wobei der mindestens eine hintere Kabelkanal (133) longitudinal um eine erste Distanz von dem mindestens einen vorderen Kabelkanal (131) beabstandet ist; und
mindestens einen versetzten Pfosten (134), der zwischen dem mindestens einen vorderen Kabelkanal (131) und dem mindestens einen hinteren Kabelkanal (133) angeordnet ist;
wobei sowohl der mindestens eine vordere Kabelkanal (131) als auch der mindestens eine hintere Kabelkanal (133) einen ersten Pfosten (130a, 132a) und einen zweiten Pfosten (130b, 132b) umfassen, die sich von der Basis (121) erstrecken, und wobei der erste Pfosten (130a, 132a) seitlich um eine zweite Distanz vom zweiten Pfosten (130b, 132b) beabstandet ist;
wobei der mindestens eine versetzte Pfosten (134) entlang der Längsachse (A) angeordnet ist, so dass sich ein optisches Kabel (140), wenn es in die Zugentlastung (120) installiert wird, um den mindestens einen versetzten Pfosten (134) herum aus der Längsachse (A) heraus biegt; und
wobei der erste Pfosten (130a, 132a) und der zweite Pfosten (130b, 132b) die Form eines rechteckigen Prismas haben.

2. Glasfaseranordnung (100) nach Anspruch 1, wobei der mindestens eine vordere Kabelkanal (131) mehrere vordere Kabelkanäle umfasst, der mindestens eine hintere Kabelkanal (133) mehrere hintere Kabelkanäle umfasst und der mindestens eine versetzte Pfosten (134) mehrere versetzte Pfosten umfasst, und wobei die Zugentlastung (120) zum Aufnehmen mehrerer optischer Kabel (140) konfiguriert ist;
wobei:
jeder der hinteren Kabelkanäle (133) entlang einer jeweiligen der mehreren parallelen Längsachsen mit einem jeweiligen der vorderen Kabelkanäle (131) fluchtet;
jeder hintere Kabelkanal (133) longitudinal um eine erste Distanz entlang der jeweiligen Längsachse von dem jeweiligen vorderen Kabelkanal (131) beabstandet ist;
jeder der versetzten Pfosten (134) entlang der jeweiligen Längsachse zwischen einem jeweiligen vorderen Kabelkanal (131) und hinteren Kabelkanal (133) angeordnet ist.

3. Glasfaseranordnung (100) nach Anspruch 2, wobei die mehreren versetzten Pfosten (134) zwischen jedem seitlich benachbarten Paar versetzter Pfosten (134) einen versetzten Kabelkanal (135) bilden.

4. Glasfaseranordnung (100) nach Anspruch 2 oder 3, wobei der zweite Pfosten (130b, 132b) eines ersten Kabelkanals der mehreren vorderen Kabelkanäle (131) der erste Pfosten (130a, 132a) eines zweiten Kabelkanals der mehreren vorderen Kabelkanäle (131) ist.

5. Glasfaseranordnung (100) nach einem der Ansprüche 1-4, die ferner Folgendes umfasst:
eine Wand (136), die sich entlang mindestens eines Teils eines Umfangs der Basis (121) erstreckt,
wobei der erste Pfosten (130a, 132a) oder der zweite Pfosten (130b, 132b) des mindestens einen vorderen Kabelkanals (131) oder des mindestens einen hinteren Kabelkanals (133) einstückig mit der Wand (136) ausgebildet ist.

6. Glasfaseranordnung (100) nach einem der Ansprüche 1-5, wobei die Basis (121) einstückig mit der Glasfaseranordnung (100) ausgebildet ist.

7. Glasfaseranordnung (100) nach einem der Ansprüche 1-5, wobei die Basis (121) zum selektiven Anbringen an der Glasfaseranordnung (100) konfiguriert ist.

8. Glasfaseranordnung (100) nach einem der Ansprüche 1-7, wobei die zweite Distanz etwa 2 mm beträgt.

9. Glasfaseranordnung (100) nach einem der Ansprüche 1-8, wobei die Zugentlastung (120) eine monolithische Kunststoffkomponente ist.

## Revendications

1. Ensemble pour fibres optiques (100) comprenant :
une base de connexion (102) ;
une pluralité de supports de connexion optique (122) ; et
un réducteur de tension (120) comprenant :
une base (121) ;
au moins un canal de câble avant (131) ;
au moins un canal de câble arrière (133) aligné avec l'au moins un canal de câble avant (131) le long d'un axe longitudinal (A), dans lequel l'au moins un canal de câble arrière (133) est espacé longitudinalement de l'au moins un canal de câble avant (131) à une première distance ; et
au moins un montant de décalage (134) disposé entre l'au moins un canal de câble avant (131) et l'au moins un canal de câble arrière (133) ;
dans lequel chacun de l'au moins un canal de câble avant (131) et de l'au moins un canal de câble arrière (133) comprend un premier montant (130a, 132a) et un second montant (130b, 132b) s'étendant à partir de la base (121), et dans lequel le premier montant (130a, 132a) est espacé latéralement du second montant (130b, 132b) à une seconde distance ;
dans lequel l'au moins un montant de décalage (134) est disposé le long de l'axe longitudinal (A), de telle sorte que lorsqu'un câble optique (140) est installé dans le réducteur de tension (120), le câble optique décrive un coude autour de l'au moins un montant de décalage (134) par rapport à l'axe longitudinal (A) ; et
dans lequel le premier montant (130a, 132a) et le second montant (130b, 132b) ont une forme de prisme rectangulaire.

2. Ensemble pour fibres optiques (100) selon la revendication 1, dans lequel l'au moins un canal de câble avant (131) comprend une pluralité de canaux de câble avant, l'au moins un canal de câble arrière (133) comprend une pluralité de canaux de câble arrière, et l'au moins un montant de décalage (134) comprend une pluralité de montants de décalage, et dans lequel le réducteur de tension (120) est configuré pour recevoir une pluralité de câbles optiques (140) ;
dans lequel :
chacun des canaux de câble arrière (133) est aligné avec un canal respectif des canaux de câble avant (131) le long d'un axe respectif d'une pluralité d'axes longitudinaux parallèles ;
chaque canal de câble arrière (133) est espacé du canal de câble avant respectif (131) longitudinalement à la première distance le long de l'axe longitudinal respectif ;
chacun des montants de décalage (134) est disposé entre un canal de câble avant respectif (131) et un canal de câble arrière respectif (133) le long de l'axe longitudinal respectif.

3. Ensemble pour fibres optiques (100) selon la revendication 2, dans lequel la pluralité de montants de décalage (134) forment un canal de câble décalé (135) entre chaque paire latéralement adjacente de montants de décalage (134).

4. Ensemble pour fibres optiques (100) selon la revendication 2 ou 3, dans lequel le second montant (130b, 132b) d'un premier canal de câble de la pluralité de canaux de câble avant (131) est le premier montant (130a, 132a) d'un second canal de câble de la pluralité de canaux de câble avant (131).

5. Ensemble pour fibres optiques (100) selon l'une quelconque des revendications 1 à 4 comprenant en outre :
une paroi (136) s'étendant le long d'au moins une partie d'un périmètre de la base (121),
dans lequel le premier montant (130a, 132a) ou le second montant (130b, 132b) de l'au moins un canal de câble avant (131) ou de l'au moins un canal de câble arrière (133) est intégré à la paroi (136).

6. Ensemble pour fibres optiques (100) selon l'une quelconque des revendications 1 à 5, dans lequel la base (121) est intégrée à l'ensemble pour fibres optiques (100).

7. Ensemble pour fibres optiques (100) selon l'une quelconque des revendications 1 à 5, dans lequel la base (121) est configurée pour être fixée sélectivement à l'ensemble pour fibres optiques (100).

8. Ensemble pour fibres optiques (100) selon l'une quelconque des revendications 1 à 7, dans lequel la seconde distance est d'environ 2 mm.

9. Ensemble pour fibres optiques (100) selon l'une quelconque des revendications 1 à 8, dans lequel le réducteur de tension (120) est un composant plastique monolithique.
